Europäisches Patentamt

European Patent Office

Office européen des brevets

(11) Numéro de publication: **0 404 700**

**A1**

(12) **DEMANDE DE BREVET EUROPEEN**

(21) Numéro de dépôt: **90420294.2**

(22) Date de dépôt: **22.06.90**

(51) Int. Cl.5: **H04N 17/04**

(30) Priorité: **23.06.89 FR 8908655**

(43) Date de publication de la demande:
**27.12.90 Bulletin 90/52**

(84) Etats contractants désignés:
**AT BE CH DE DK ES GB GR IT LI LU NL SE**

(71) Demandeur: **DELTA TECHNOLOGIES**
**Z.A. La Pélissière**
**F-01300 Belley(FR)**

(72) Inventeur: **Aujames, Philippe**

**22 rue des Cordeliers**
**F-01300 Belley(FR)**
Inventeur: **Pellet, Jean-Pierre**
**La Côte**
**F-01300 Belley(FR)**
Inventeur: **Scharff, Philippe**
**Le Fayet Nord**
**F-38540 Valencin(FR)**

(74) Mandataire: **Bratel, Gérard et al**
**Cabinet GERMAIN & MAUREAU B.P. 3011**
**F-69392 Lyon Cédex 03(FR)**

(54) **Système d'assistance au réglage des tubes cathodiques.**

(57) Le système est du genre utilisant une caméra vidéo (2) pour l'acquisition de mires affichées sur l'écran (3) du tube cathodique (1) à régler. La caméra (2) est reliée, par l'intermédiaire d'un dispositif de traitement d'images (4), à une unité de traitement programmée (5,8) ; celle-ci compare les coordonnées des points de la mire analysée (7) avec les coordonnées théoriques de ces points, en séparant l'influence des différents déréglages dans la déformation de la mire. L'unité (5,8) est reliée à des moyens d'affichage (10) pour la visualisation des indices de déréglage.

Application au réglage des terminaux informatiques, récepteurs de télévision, moniteurs, etc.

FIG.1

EP 0 404 700 A1

La présente invention concerne un système d'assistance au réglage des tubes cathodiques, pouvant être destinés à des terminaux informatiques, des récepteurs de télévision, des moniteurs, etc. Plus particulièrement, cette invention se rapporte à un système d'assistance au réglage des tubes cathodiques dans lequel une caméra vidéo est utilisée pour l'acquisition d'images géométriques particulières dites "mires", formées par des ensembles de points, qui sont affichées sur l'écran du tube cathodique à régler.

Actuellement, les terminaux informatiques arrivant aux postes de réglage sont équipés de tubes cathodiques et de bobines déviatrices quelconques, aucun pré-réglage n'étant effectué ; aussi les caractéristiques géométriques et lumineuses d'affichage sur l'écran sont-elles entièrement différentes d'un appareil à l'autre.

Les premières recherches sur les possibilités de réglage assisté par vision de ces caractéristiques ont permis d'établir les points suivants :

1. Tous les défauts de réglage engendrent sur l'écran des anomalies géométriques ou lumineuses que l'on est capable de détecter et de mesurer sur une image de l'écran acquise au moyen d'une caméra. La précision de la prise d'image et des mesures est ici suffisante pour juger de la validité ou de la non-validité du réglage par rapport aux tolérances demandées.

2. Les paramètres de rotation, hauteur, largeur, luminosité et "focus" sont réglés chacun par action sur un seul organe ; ceux de centrage et de linéarité sont réglés par action sur d'autres organes multiples, tels que des aimants ou des plaques.

3. Parmi tous ces paramètres, seule la linéarité pose des difficultés majeures pour un réglage systématique assisté par vision, en raison du nombre d'organes à actionner et de l'interactivité apparentée des réglages. Cette difficulté est confirmée par la pratique actuelle : les postes de réglage de linéarité doivent être doublés, par rapport à ceux affectés aux autres paramètres, et le temps de réglage de la linéarité représente environ 75 % du temps de réglage total.

Les réglages et contrôles à effectuer comprennent, dans l'ensemble :
- les réglages géométriques : centrage, rotation, hauteur, largeur, linéarité ;
- le réglage de luminosité ;
- le réglage de focus.

Ces réglages s'effectuent aujourd'hui d'une façon séquentielle, par une succession de mires qui sont affichées sur l'écran et que l'opérateur doit placer dans leurs gabarits respectifs. Le système actuel est tel qu'il est impossible d'effectuer le réglage de façon définitive en une seule passe, et qu'il est nécessaire de procéder à un réglage grossier sur tous les paramètres, suivi d'un réglage plus fin ; de plus, certains réglages sont dépendants les uns des autres.

La présente invention vise à éliminer ces inconvénients en fournissant un système qui permet une assistance à l'opérateur, ou éventuellement une commande entièrement automatisée, pour le réglage de tous les paramètres (centrage, rotation, hauteur, largeur, linéarité, luminosité, focus) en une seule passe et ceci à l'aide de mires engendrées sur l'écran, avec un traitement qui permet de rendre ces différents paramètres indépendants les uns des autres, donc un système simple et rapide dans sa mise en oeuvre.

A cet effet, l'invention a pour objet un système d'assistance au réglage des tubes cathodiques, du genre utilisant une caméra vidéo pour l'acquisition de mires, formées par des ensembles de points, qui sont affichées sur l'écran du tube cathodique à régler, et dans lequel la caméra est reliée, par l'intermédiaire l'un dispositif de traitement d'images fournissant les coordonnées des points qui composent la mire analysée, à une unité de traitement programmée qui compare les coordonnées des points de la mire analysée avec les coordonnées théoriques de ces points, en séparant l'influence des différents déréglages dans la déformation de cette mire, l'unité de traitement programmée étant reliée à des moyens d'affichage pour la visualisation des indices de déréglage et/ou reliée à des moyens de réglage automatique du tube cathodique.

Grâce à la séparation de l'influence des différents déréglages, l'opérateur dispose d'informations qui lui permettent de faire tous les réglages dans un ordre quelconque, et sans avoir à reprendre un réglage déjà fait. Les moyens de visualisation, notamment réalisables sous la forme d'un écran vidéo associé à l'unité de traitement programmée qui peut être un ordinateur, indiquent directement à l'opérateur les réglages à effectuer sur les organes dont il a le contrôle.

Avantageusement, le système objet de l'invention comprend aussi, en vue d'un éventuel préréglage, des moyens d'affichage, sur l'écran du tube cathodique à régler, d'une mire constituée d'un nombre relativement restreint de points, cette mire devant être amenée au centre de l'écran dans un premier temps. Le système peut encore comprendre, toujours pour le préréglage, des moyens d'affichage, sur l'écran du tube cathodique à régler, d'une mire occupant la totalité de l'écran et permettant une correction de la position relative de cet écran par rapport à la caméra.

Dans un mode de réalisation préféré de l'invention, le système comprend, pour le réglage fin qui est le réglage proprement dit du tube cathodique, des moyens d'affichage sur l'écran du tube d'une mire constituée d'un nombre relativement important de points, tandis que l'unité de traitement programmée est prévue pour déterminer le vecteur des indices de déréglage en résolvant aux moindres carrés l'équation E = MR, dans laquelle E est le vecteur d'erreur composé des écarts entre les coordonnées théoriques et les coordonnées mesurées des points de la mire, et M est une matrice modélisant le comportement du tube.

Selon une caractéristique complémentaire de l'invention, le système comprend, pour le réglage du focus, l'utilisation de la caméra précitée avec la mire constituée d'un nombre relativement important de points, et pour le contrôle du focus, des moyens d'affichage, sur 1 'ecran du tube cathodique à régler, d'une mire occupant seulement la partie centrale de l'écran et formée par un point vidéo sur deux, avec une disposition en quinconce, tandis qu'une deuxième caméra vidéo, également reliée au dispositif de traitement d'images est prévue pour viser seulement la partie centrale de l'écran sur laquelle est formée cette mire de contrôle, l'unité de traitement étant prévue pour effectuer, en deux phases successives, un réglage général optimum du focus sur la totalité de l'écran, puis un contrôle du focus dans la seule partie centrale de cet écran sur le critère de la séparation des points de la mire affichée dans la partie centrale et visée par la deuxième caméra, dont le pouvoir séparateur est supérieur à celui de la caméra principale.

Selon une autre caractéristique, relative à la réalisation pratique du système objet de l'invention, celui-ci comprend un caisson horizontal allongé, qui contient vers l'une de ses extrémités la ou les caméras, et dont l'extrémité opposée est prévue pour recevoir le tube cathodique à régler par son côté comportant l'écran, tandis que la face supérieure du caisson supporte le dispositif de traitement d'images, l'unité de traitement programmée et les moyens d'affichage pour la visualisation des indices de déréglage.

De toute façon, l'invention sera mieux comprise à l'aide de la description qui suit, en référence au dessin schématique annexé représentant, à titre d'exemple non limitatif, une forme d'exécution de ce système d'assistance au réglage des tubes cathodiques :

Figure 1 est un schéma de principe synoptique du système conforme à l'invention ;

Figure 2 illustre les opérations facultatives de préréglage ;

Figure 3 montre la mire générale de réglage ;

Figure 4 montre la mire particulière de réglage du focus, avec indication d'un détail à échelle agrandie ;

Figures 5 et 6 sont des vues, respectivement de côté avec coupe et en plan par dessus, d'une réalisation pratique du système objet de l'invention.

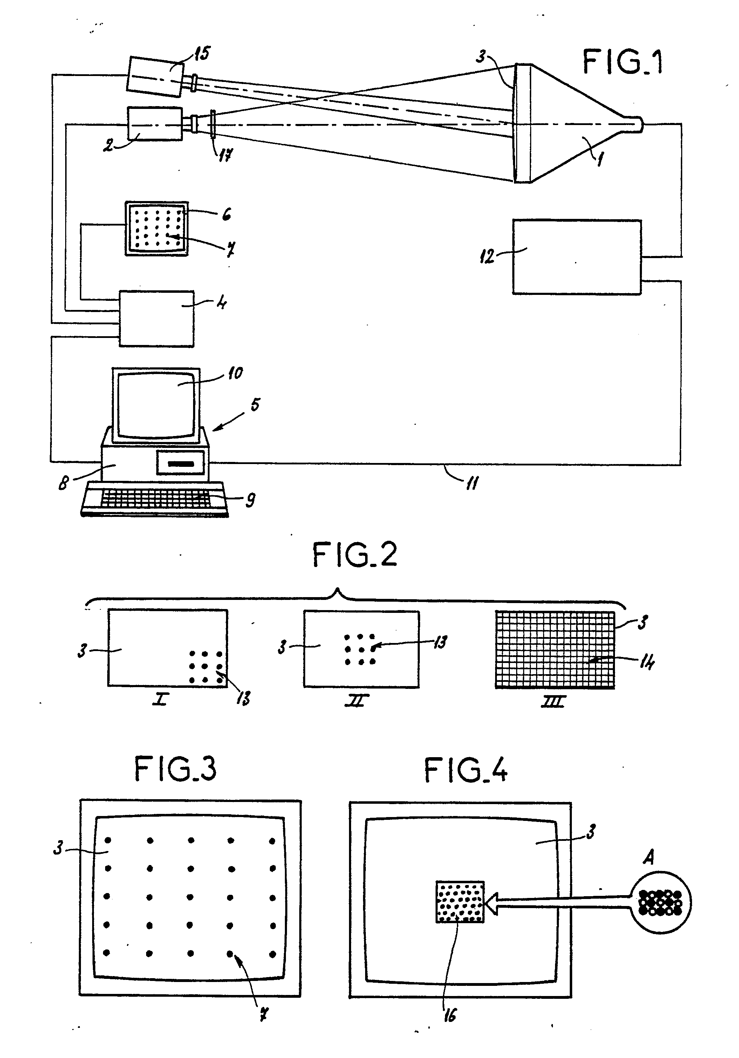

Sur le schéma synoptique de la figure 1, le repère 1 désigne un tube cathodique qui doit être contrôlé et réglé avec l'assistance du système objet de l'invention. Le tube cathodique 1 est positionné en face d'une caméra principale 2, du type caméra matricielle CCD, qui vise la totalité de l'écran 3 du tube 1. La caméra 2 est reliée, par l'intermédiaire d'un dispositif de traitement d'images 4, à un ordinateur 5 chargé d'un programme de traitement. De façon facultative, le dispositif de traitement d'images 4 est raccordé aussi à un moniteur de contrôle vidéo 6, dont l'écran fournit une image de la mire 7 visée par la caméra 2.

L'ordinateur 5 comprend, de façon classique, une unité centrale de traitement 8, un clavier 9 et un écran vidéo d'affichage 10 qui, dans le cas présent, sert de moyen de contrôle et d'assistance au réglage pour l'opérateur. Cet ordinateur 5 comporte une liaison 11 avec l'ensemble électronique 12 associé au tube cathodique 1 à régler. La liaison 11 transmet les ordres de changement de la mire à afficher sur l'écran 3 du tube 1. En option, dans le cas d'un système avec réglage automatique du tube 1, la liaison 11 sert aussi à la transmission des signaux nécessaires à ce réglage automatique.

Pour permettre un réglage optimum, en cas de déréglage complet du tube cathodique 1, il est nécessaire d'effectuer un préréglage dont la séquence, illustrée par la figure 2, est la suivante : Le tube 1 est positionné en face de la caméra 2. Une mire grossière 13, constituée d'un nombre restreint de points, est affichée sur l'écran 3 comme indiqué en I. L'opérateur effectue alors un réglage grossier, de telle façon que la mire 13 se positionne au centre de l'écran 3, comme indiqué en II. Ensuite, une autre mire "plein écran" 14 est affichée, comme montré en III, pour permettre une correction de la position relative de l'écran 3 par rapport à la caméra 2, "plein écran" signifiant que l'écran 3 a tous ses points, allumés.

Le réglage fin, ou réglage unique si aucun préréglage n'est nécessaire, demande l'affichage sur l'écran 3 d'une mire 7 constituée d'un nombre relativement important de points, par exemple 25 points, comme montré sur la figure 3. Le dispositif de traitement d'images 4 analyse l'image de la mire 7 donnée par la caméra 2, et il fournit à l'ordinateur 5 les coordonnées des points qui composent cette mire 7.

Dans l'ordinateur 5, le programme de traitement principal sépare l'influence des différents déréglages (rotation, centrage, amplitude, linéarité) dans la déformation de la mire analysée. Un autre programme de traitement s'occupe de la luminosité, du focus et de la colorimétrie.

Un programme d'affichage permet de visualiser simultanément, sur l'écran vidéo 10 de contrôle et d'assistance du réglage, l'indice de déréglage de chacun des organes. L'image de l'écran 10 est remise à jour en permanence.

A l'aide des indications fournies par l'écran 10, l'opérateur peut ainsi effectuer tous les réglages du tube 1 dans un ordre quelconque. Il n'y a pas à reprendre un réglage déjà fait.

S'il est prévu, le système de réglage automatique travaille simultanément avec l'opérateur, à partir des indices de déréglage que lui envoie l'ordinateur 5.

Le principe du programme de traitement est le suivant :

L'état de déformation de la mire 7 est représenté par un vecteur d'erreur E, composé par les écarts entre les coordonnées théoriques et les coordonnées mesurées des points de la mire. Si la mire 7 est composée de N points, le vecteur E a donc une longueur de 2 x N.

Le vecteur R des indices de déréglage a autant d'éléments que de degrés de liberté dans le réglage. Le comportement du tube cathodique est modélisé par une matrice M telle que : $E = MR$. La ième colonne de la matrice M représente donc le vecteur d'erreur quand on dérègle le ième point d'une quantité (arbitraire) 1.

Le traitement consiste donc à résoudre aux moindres carrés le système, pour trouver le vecteur R en fonction du modèle M et de l'erreur mesurée E.

Le réglage et contrôle du focus fait appel aussi à une deuxième caméra vidéo 15, également reliée au dispositif de traitement d'images 4, qui vise seulement la partie centrale de l'écran 3 du tube cathodique 1 à contrôler. Ce réglage du focus, à l'aide de deux caméras 2 et 15, s'effectue alors en deux phases :

La première phase consiste en un réglage optimum sur tout l'écran 3. La mire de réglage générale 7 (figure 3) est affichée sur l'écran 3, et le signal vidéo de la caméra 2 visant la totalité de l'écran 3 est utilisé. Le système de traitement d'images 4 fournit à l'ordinateur 5 le nombre de pixels éclairés par chacun des points (en réalité de petits disques) de la mire 7. Le réglage est optimum quand le nombre total de pixels passe par un minimum. Ce réglage est uniforme sur l'écran 3 si le minimum a lieu simultanément pour chacun des points de la mire 7. On peut prendre, comme critère de rejet, le fait suivant : il y a au moins un point pour lequel le nombre de pixels à l'optimum général, diminué du nombre de pixels minimum de ce même point, est supérieur à un certain seuil.

La deuxième phase consiste en un contrôle du focus au centre de l'écran 3. Le réglage général du focus étant optimum, une mire spéciale 16 de contrôle du focus est affichée au centre de l'écran 3, comme le montre la figure 4, cette mire 16 occupant par exemple seulement environ le quart de la largeur totale et le quart de la hauteur totale de l'écran 3. La mire 16, de forme rectangulaire, est formée par un point vidéo sur deux avec disposition en quinconce, comme l'illustre le détail agrandi A de la figure 4.

La deuxième caméra 15, qui vise la partie centrale de l'écran 3, est alors utilisée. Pour la caméra 15, un pixel de l'écran 3 correspond à deux pixels de cette caméra 15. Le réglage du focus est jugé acceptable si deux points de la mire 16 sont séparables horizontalement et verticalement.

La deuxième caméra 15, utilisée pour le réglage du focus comme on vient de l'indiquer, permet aussi, en combinaison avec un filtre coloré 17 associé à la caméra principale 2 (voir figure 1), d'identifier le type de phosphore de l'écran (3) du tube cathodique 1, tel que : ambre - vert -blanc.

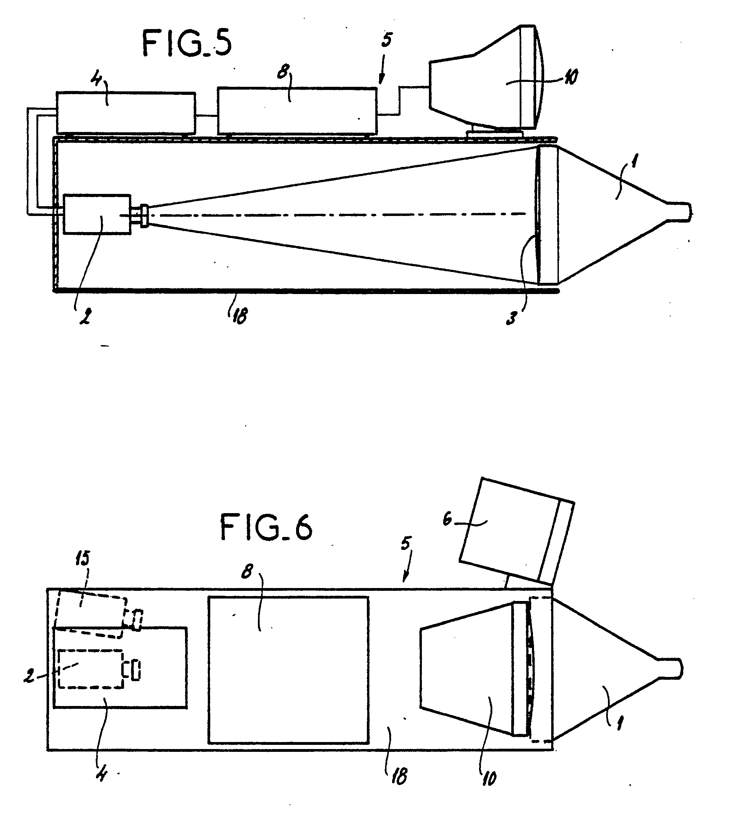

Les figures 5 et 6 montrent, à titre d'exemple, une réalisation pratique du système d'assistance au réglage de tubes cathodiques selon l'invention, dont la figure 1 donne le schéma de principe. Un caisson allongé 18, disposé horizontalement, contient vers l'une de ses extrémités les deux caméras vidéo 2 et 15. L'extrémité opposée du caisson 18 est ouverte et reçoit le tube cathodique 1 à régler, dont l'écran 3 est tourné vers l'intérieur du caisson 18 pour être visé par les caméras 2 et 15. La face supérieure du caisson 18 supporte le dispositif de traitement d'images 4, ainsi que l'unité centrale 8 et l'écran vidéo 10 de l'ordinateur 5. Le moniteur de contrôle vidéo optionnel 6 peut être monté latéralement, sur le côté de l'écran 10.

On obtient ainsi un ensemble compact et ergonomique.

Comme il va de soi, l'invention ne se limite pas à la seule forme d'exécution de ce système d'assistance au réglage des tubes cathodiques qui a été décrite ci-dessus, à titre d'exemple ; elle en embrasse, au contraire, toutes les variantes de réalisation et d'application respectant le même principe.

## Revendications

1. Système d'assistance au réglage des tubes cathodiques, dans lequel une caméra vidéo (2) est utilisée pour l'acquisition d'images géométriques particulières dites "mires", formées par des ensembles de points, qui sont affichées sur l'écran (3) du tube cathodique (I) à régler, caractérisé en ce que la caméra (2) est reliée, par l'intermédiaire d'un dispositif de traitement d'images (4) fournissant les coordonnées des points qui composent la mire analysée, à une unité de traitement programmée (5,8) qui compare les coordonnées des points de la mire analysée avec les coordonnées théoriques de ces points, en séparant l'influence des différents déréglages dans la déformation de cette mire, l'unité de traitement programmée (5,8) étant reliée à des moyens d'affichage (10) pour la visualisation des indices de déréglage et/ou reliée (en 11) à des moyens de réglage automatique du tube cathodique (1).

2. Système d'assistance au réglage des tubes cathodiques selon la revendication 1, caractérisé en ce que le dispositif de traitement d'images (4) est raccordé à un moniteur de contrôle vidéo (6), dont l'écran fournit une image de la mire (7,13, 14) visée par la caméra (2).

3. Système d'assistance au réglage des tubes cathodiques selon la revendication 1 ou 2, caractérisé en ce qu'il comprend, en vue d'un éventuel préréglage, des moyens d'affichage, sur l'écran (3) du tube cathodique à régler (1), d'une mire (13) constituée d'un nombre relativement restreint de points, cette mire (13) devant être amenée au centre de l'écran (3).

4. Système d'assistance au réglage des tubes cathodiques selon la revendication 3, caractérisé en ce qu'il comprend encore, pour le préréglage, des moyens d'affichage, sur l'écran (3) du tube cathodique à régler (1), d'une mire (14) occupant la totalité de l'écran (3) et permettant une correction de la position relative de cet écran (3) par rapport à la caméra (2).

5. Système d'assistance au réglage des tubes cathodiques selon l'une quelconque des revendications 1 à 4, caractérisé en ce qu'il comprend, pour le réglage fin, des moyens d'affichage, sur l'écran (3) du tube cathodique à régler (1), d'une mire (7) constituée d'un nombre (N) relativement important de points, tandis que l'unité de traitement programmée (5,8) est prévue pour déterminer le vecteur (R) des indices de déréglage en résolvant aux moindre carrés l'équation $E = NR$, dans laquelle E est le vecteur d'erreur composé des écarts entre les coordonnées théoriques et les coordonnées mesurées des (N) points de la mire (7), et M est une matrice modélisant le comportement du tube (1).

6. Système d'assistance au réglage des tubes cathodiques selon l'une quelconque des revendications 1 à 5, caractérisé en ce qu'il comprend, pour le réglage du focus, l'utilisation de la caméra (2) précitée avec la mire (7) constituée d'un nombre (N) relativement important de points et pour le contrôle du focus, des moyens d'affichage, sur l'écran (3) du tube cathodique à régler (1), d'une mire (16) occupant seulement la partie centrale de l'écran (3) et formée par un point vidéo sur deux, avec une disposition en quinconce, tandis qu'une deuxième caméra vidéo (15), également reliée au dispositif de traitement d'images (4), est prévue pour viser seulement la partie centrale de l'écran (3) sur laquelle est formée cette mire (16) de contrôle, l'unité de traitement programmée (5,8) étant prévue pour effectuer, en deux phases successives, un réglage général optimum du focus sur la totalité de l'écran (3), puis un contrôle du focus dans la seule partie centrale de cet écran (3) sur le critère de la séparation des points de la mire (16) affichée dans ladite partie centrale et visée par la deuxième caméra (15).

7. Système d'assistance au réglage des tubes cathodiques selon la revendication 1, caractérisé en ce que la deuxième caméra (15) est aussi prévue, en combinaison avec un filtre coloré (17) associé à la caméra principale (2), pour identifier le type de phosphore de l'ecran (3) du tube cathodique (1).

8. Système d'assistance au réglage des tubes cathodiques selon l'une quelconque des revendications 1 à 7, caractérisé en ce qu'il comprend un caisson horizontal allongé (18), qui contient vers l'une de ses extrémités la ou les caméras (2,15), et dont l'extrémité opposée est prévue pour recevoir le tube cathodique à régler (1) par son côté comportant l'écran (3), tandis que la face supérieure du caisson (18) supporte le dispositif de traitement d'images (4), l'unité de traitement programmée (5,8) et les moyens d'affichage (10) pour la visualisation des indices de déréglage.

FIG.1

FIG.2

FIG.3

FIG.4

FIG.5

FIG.6

Office européen
des brevets

**RAPPORT DE RECHERCHE EUROPEENNE**

Numéro de la demande

EP  90 42 0294

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | IEEE TRANSACTIONS ON CONSUMER ELECTRONICS, vol. 34, no. 3, août 1988, pages 807-812, New York, US; J. SAITOH et al.: "A new TV receiver" * Page 810, colonne de gauche, ligne 30 - page 811, colonne de gauche, ligne 4; tableau 1 *. | 1 | H 04 N 17/04 |
| A | IEEE 1988 INTERNATIONAL CONFERENCE ON CONSUMER ELECTRONICS, DIGEST OF TECHNICAL PAPERS ICCE, Rosemont, Illinois, 8-10 juin 1988, pages 284-285, IEEE, New York, US; L.I. SUCKLE: "Automatic alignement techniques for color TV manufacturing" * Page 284, colonne de droite, ligne 33 - page 285, colonne de gauche, ligne 34; figure unique * | 1 | |
| A | EP-A-0 116 856 (IMAGE GRAPHICS INC.) * Page 16, lignes 4-25; page 19, lignes 15-32 * | 1 | **DOMAINES TECHNIQUES RECHERCHES (Int. Cl.5)** H 04 N |

Le présent rapport a été établi pour toutes les revendications

| Lieu de la recherche | Date d'achèvement de la recherche | Examinateur |
|---|---|---|
| LA HAYE | 12-09-1990 | BEQUET T.P. |